(19) Europäisches Patentamt
European Patent Office
Office européen des brevets

(11) **EP 3 562 116 A1**

(12) **EUROPEAN PATENT APPLICATION**

(43) Date of publication:
**30.10.2019 Bulletin 2019/44**

(51) Int Cl.:
**H04L 29/06** (2006.01)    *H04W 12/04* (2009.01)

(21) Application number: **18169421.7**

(22) Date of filing: **26.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Aschauer, Hans
81829 München (DE)**
• **Fries, Steffen
85598 Baldham (DE)**

(54) **CRYPTOGRAPHIC KEY EXCHANGE OR KEY AGREEMENT INVOLVING A DEVICE WITHOUT NETWORK ACCESS**

(57)    A method (10) of cryptographic exchange of or agreement on a shared secret key between a non-network connected device (20) and a network connected device, and a corresponding non-network connected device (20) are provided. The non-network connected device (20) is arranged to receive messages having a predetermined maximum length. The method (10) comprises: initiating (11), by the non-network connected device (20), the cryptographic exchange or agreement; completing (12), by the network connected device, the cryptographic exchange or agreement; and verifying (13) the shared secret key. The method (10) may particularly be used to ensure data protection in healthcare environments.

## FIG 1

EP 3 562 116 A1

**Description**

Field of the invention

The present invention relates to cryptographic key exchange or key agreement in asymmetric communication environments, in particular between endpoint devices respectively having and not having access to a network.

Background of the invention

Known cryptographic key exchange and key agreement protocols implicitly assume symmetrical capabilities in both directions of a communication session.

Such known approaches comprise the following: (a) providing the involved endpoint devices with a system-wide symmetric key before productive use, e.g. in a firmware, (b) providing endpoint devices with individual keys before productive use in a commissioning phase, e.g. by creating the key at one endpoint device and providing the key to a peering endpoint device in case of symmetric keys, or by requesting issuance of a certificate via a product public key infrastructure, PKI, in case of asymmetric keys, or (c) performing conventional asymmetric key agreement between the involved endpoint devices.

However, directional communication capabilities may be subject to strong asymmetry if one of the involved endpoint devices lacks network access, and thus requires indirect communication via one or more intermediate devices.

For instance, an asymmetric communication session as indicated above may involve a non-network connected device and a network connected device. In a direction towards the network connected device, a request may involve (a) the non-network connected device displaying a Quick Response, QR, code, (b) an intermediate device such as a smartphone scanning the QR code, and (c) the intermediate device submitting the information obtained from the QR code to the network connected device. In a reverse direction towards the non-network connected device, a response may involve (d) the network connected device submitting a response information towards the non-network connected device, (e) the intermediate device displaying the response information, and (f) manually typing in the response information displayed by the intermediate device at the non-network connected device.

As may have become evident, said network connected device may typically receive appreciable data volumes. For instance, messages received by said network connected device may comprise a few hundred bytes. By contrast, said non-network connected device may be capable of receiving a few bytes only. Accordingly, known cryptographic key exchange and key agreement protocols may not work properly under such circumstances.

Corresponding disadvantages of the above-mentioned known approaches under such circumstances comprise (a) compromise of the whole cryptographic system by breaking a single device, (b) high production expenses, which may be reduced for new devices to be commissioned by combining key provisioning and product registration, and (c) difficulty of information transfer from the network connected device to the non-network connected device, as it may be unreasonable to type in the sheer volume of information, or expensive to provide special intermediate devices simulating a keyboard-based transfer.

Relevant art comprises the document US 8,531,247 B2, the document US 8,892,616 B2, the document US 8,300,811 B2, the document US 9,147,088 B2, the document US 9,584,311 B2, the document EP 2 976 707 B1, the document EP 2 605 445 B1, the document EP 2 870 565 A1, the document EP 2 891 102 A1, the document WO 2017/137256 A1, the document EP 2 870 565 B1, the document EP 3 028 140 B1, the document EP 17175275 as well as the document US 8,843,761 B2.

Brief summary of the invention

In view of the above considerations, there is a need in the art to further improve cryptographic key exchange and key agreement with particular reference to asymmetric communication environments.

This object of the invention is respectively solved by methods and devices as defined by the independent claims. Preferred embodiments of the invention are set forth in the dependent claims.

According to a first aspect, a method of cryptographic exchange of or agreement on a shared secret key is provided. The method is performed between a non-network access device and a network access device. The non-network connected device is arranged to receive messages having a predetermined maximum length. The method comprises: initiating, by the non-network connected device, the cryptographic exchange or agreement; completing, by the network connected device, the cryptographic exchange or agreement; and verifying the shared secret key.

Advantageously, such key exchange or key agreement schemes carried out in a single pass from the initiating non-network connected device to the completing network connected device take just half a round trip to complete, and eliminate the requirement of known key exchange or key agreement schemes of transferring significant volumes of information in a return direction towards the non-network connected device. Therefore, acknowledging and verifying the completed key exchange or key agreement to the initiating non-network connected device may be achieved using short messages not exceeding said predetermined maximum length.

According to some embodiments, the non-network connected device may be arranged to receive messages having a predetermined maximum length corresponding to a predetermined number of decimal digits.

Advantageously, such key exchange or key agreement schemes may not require verification of success of the key exchange or key agreement scheme at all, or merely require a short verification code in compliance with said predetermined maximum length. For instance, a six-digit PIN code is easily typed in a keyboard, even on a touch screen display of a smartphone.

According to some embodiments, initiating and completing the exchange or agreement may respectively comprise using, by the network connected device and the non-network connected device, public-key cryptography, and the non-network connected device having a public key associated with the network connected device.

For instance, using public-key cryptography may involve a key agreement protocol based on a Diffie-Hellman, DH, scheme, or alternatively a key exchange protocol based on Elliptic Curve Dieffie-Hellman, ECDH, or alternatively a key exchange protocol based on a Rivest-Shamir-Adleman, RSA, encryption scheme.

Advantageously, such key exchange or key agreement schemes provide individual keys for individual devices, so that breaking a respective device does not compromise the whole system.

Advantageously, such key exchange or key agreement schemes may be integrated in a customer's existing commissioning or care (e.g. update) processes, and thus enable providing individual keys for individual devices, including inventory devices, without any significant overhead.

According to some embodiments, verifying the shared secret key may comprise determining, by the network connected device, a verification key from the shared secret key.

For instance, determining the verification key from the shared secret key may involve a hash-based key derivation function, HKDF, using a known HMAC hash function, e.g. HMACSHA256.

According to some embodiments, determining, by the network connected device, the verification key from the shared secret key may comprise using, by the network connected device, a verification key having the predetermined maximum length.

According to some embodiments, verifying the shared secret key may further comprise communicating, from the network access device to the non-network connected device, the determined verification key.

According to some embodiments, communicating, from the network connected device to the non-network connected device, the determined verification key may comprise communicating, from the network connected device to the non-network connected device, the determined verification key via a proxy device.

According to some embodiments, communicating, from the network connected device to the non-network connected device, the determined verification key may comprise displaying, by the proxy device, the communicated verification key, and inputting the displayed verification key to the non-network connected device.

According to some embodiments, communicating, from the network connected device to the non-network connected device, the determined verification key may comprise inputting the displayed verification key to the non-network access device using a keyboard.

According to some embodiments, verifying the shared secret key may further comprise verifying, by the non-network connected device, the communicated verification key.

According to some embodiments, verifying, by the non-network connected device, the communicated verification key may comprise determining, by the non-network connected device, a further verification key from the shared secret key.

According to some embodiments, verifying, by the non-network connected device, the communicated verification key may further comprise comparing, by the non-network connected device, the communicated verification key with the further verification key.

According to a second aspect, a non-network connected device is provided. The non-network connected device is arranged to receive messages having a predetermined maximum length. The non-network access device comprises a processing device arranged for: initiating a cryptographic exchange of or agreement on a shared secret key between the non-network connected device and a network connected device, the network connected device being arranged for completing the cryptographic exchange or agreement; and verifying the shared secret key.

According to some embodiments, the processing device may be arranged to perform the method of various embodiments.

Brief description of the drawings

Embodiments of the invention will be described with reference to the accompanying drawings, in which the same or similar reference numerals designate the same or similar elements.

Fig. 1    is a schematic diagram illustrating methods according to various embodiments.
Fig. 2    is a schematic diagram illustrating a network node according to an embodiment.


Detailed description of the drawings

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling, or by means of wired or wireless communication. Functional blocks may be implemented in hardware, firmware, software, or a combination thereof.

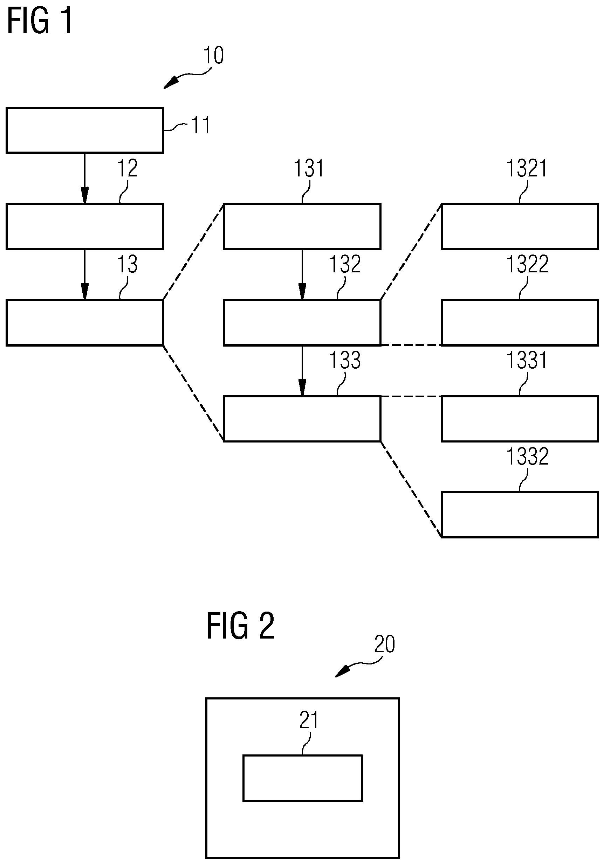

Fig. 1 is a schematic diagram illustrating methods 10 according to various embodiments.

With reference to the left-hand side of Fig. 1, the basic steps of the method 10 are shown for affecting a cryptographic exchange of, or an agreement on, a shared secret key between a non-network connected device 20 and a network connected device.

It is important to note that the non-network connected device 20 is arranged to receive messages having a predetermined maximum length only, in particular corresponding to a predetermined number of decimal digits. Hence, communication between the involved devices may be subject to strong asymmetry in terms of viable message lengths.

Initially, the non-network connected device 20 does not possess any individual cryptographic key that is already known at the network connected device.

The method 10 comprises:
At step 11, initiating 11, by the non-network connected device 20, the cryptographic exchange or agreement.

At step 12, completing 12, by the network connected device, the cryptographic exchange or agreement.

At step 13, verifying 13 the shared secret key.

Initiating 11 and completing 12 the key exchange or key agreement respectively may comprise using, by the network connected device and the non-network connected device, public-key cryptography, and the non-network connected device having a public key associated with the network connected device.

With reference to the center of Fig. 1, details of a realization of the verifying 13 step is shown, as indicated by a pair of dashed lines starting from said step and embracing said center section of Fig. 1.

At step 131, verifying 13 the shared secret key may comprise determining 131, by the network connected device, a verification key from the shared secret key. This verification key may be either a subset of the shared key or a derived key, e.g., using a hash function like SHA-256 or a key derivation function such as HKDF. The determining 131, by the network connected device, the verification key from the shared secret key may, in turn, comprise using, by the network connected device, a verification key having the predetermined maximum length.

At step 132, verifying 13 the shared secret key may further comprise communicating 132, from the network connected device to the non-network connected device 20, the determined verification key. Communicating 132, from the network connected device to the non-network connected device 20, the determined verification key may comprise communicating, from the network connected device to the non-network connected device 20, the determined verification key via a proxy device (not shown).

At step 133, verifying 13 the shared secret key may further comprise verifying 133, by the non-network connected device 20, the communicated verification key.

With reference to the right-hand side of Fig. 1, more details of a realization of the communicating 132 and verifying 133 steps are shown, as indicated by pairs of dashed lines starting from the respective step and embracing a respective section on the right-hand side of Fig. 1.

At steps 1321 and 1322, communicating 132, from the network connected device to the non-network connected device 20, the determined verification key may comprise displaying 1321, by the proxy device 40, the communicated verification key, and may further comprise inputting 1322 the displayed verification key to the non-network connected device 20, in particular using a keyboard.

The step of inputting 1322 the displayed verification key to the non-network connected device 20 is typically carried out manually. The manual operator may be a system administrator being capable of authenticating himself or herself at the network connected device, for instance via login at a web application being executed by the network connected device and via secured communication, e.g. using Transport Layer Security, TLS. To this end, the system administrator may use, e.g., a smartphone for scanning a QR code displayed at the non-network connected device and accessing an (https-) link included in the QR code.

At step 1331, verifying 133, by the non-network connected device 20, the communicated verification key may comprise determining 1331, by the non-network connected device 20, a further verification key from the shared secret key.

At step 1332, verifying 133, by the non-network connected device 20, the communicated verification key may further comprise comparing 1332, by the non-network connected device 20, the communicated verification key with the further verification key.

In case of a Diffie-Hellman key exchange scheme, the method 10 may be realized as follows:

The DH key exchange scheme may be defined using the multiplicative group GF_p of integers modulo p, or using elliptic curves. While the following illustrates the former case, elliptic curves work similarly.

Initially, public parameters of the DH scheme are chosen, namely p, which is a large prime, and g, which is a primitive root modulo p. These two values are chosen in this way to ensure that the resulting shared secret key can take on any value from 1 to p-1. In addition, a private key x_NAD of the network connected device, NAD, is chosen, and a static public key y_NAD of the network connected device is provided in a firmware of the non-network connected device 20, NNAD:

$$\texttt{y\_NAD = g}^{\texttt{x\_NAD}} \texttt{ mod p}$$

At step 11 of the method 10, initiating 11, by the non-network connected device 20, the cryptographic exchange or agreement may involve choosing a private key x_NNAD (a random number) of the non-network connected device 20,

$$\texttt{1 < x\_NNAD < p}$$

determining a public key y_NNAD of the non-network connected device 20,

$$\texttt{y\_NNAD = g}^{\texttt{x\_NNAD}} \texttt{ mod p}$$

displaying the public key y_NNAD at the non-network connected device 20, e.g. as a QR code, which may include optional information such as a device ID, software version information and so forth, and

transferring the public key y_NNAD via a proxy device, e.g. a smartphone, to the network connected device, optionally after authentication of the system administrator at the network connected device. A QR code may include a (https-) link encoding the public key y_NNAD as well as any optional information provided.

After scanning the QR code by the smartphone, the link referencing a web server at the network connected device is accessed, and the web server may optionally require authentication of the system administrator.

At step 12 of the method 10, completing 12, by the network connected device, the cryptographic exchange or agreement may involve the network connected device receiving the public key y_NNAD of the non-network device (i.e., the shared secret key) from the proxy device, and both the network connected device as well as the non-network connected device 20 to respectively determine the shared secret key z based on the respectively available information:

$$\texttt{z = y\_NAD}^{\texttt{x\_NNAD}} \texttt{ mod p = g}^{\texttt{x\_NAD} \cdot \texttt{x\_NNAD}} \texttt{ mod p}$$

$$\texttt{z = y\_NNAD}^{\texttt{x\_NAD}} \texttt{ mod p = g}^{\texttt{x\_NNAD} \cdot \texttt{x\_NAD}} \texttt{ mod p}$$

At step 13, verifying 13 the shared secret key may involve using known key derivation functions such as HKDF to derive a verification key k_verify from the shared secret key z,

$$\texttt{k\_verify = HKDF(z)}$$

delineating a verification code v having, for example, six decimal digits, from the verification key k_verify in turn, by interpreting the verification key k_verify as a 32-bit integer value,

$$\texttt{v = k\_verify mod (10\^6)}$$

transferring the verification code v from the network connected device to the proxy device, where it is displayed and typed in at the non-network connected device 20 by the manual operator.

Success of the key agreement scheme is noted by the non-network connected device 20 if the received and the determined verification codes match, and noted by the network connected device if it receives, from the non-network connected device 20 and via the proxy device, a message being provided with a key derived (e.g. using HMACSHA256) from the shared secret key z. This may be a message being transmitted anyhow in the course of the communication session.

Likewise, transferring the verification code v from the network connected device to the proxy device may also be omitted if in the course of the communication session a message being provided with a key derived from the shared secret key z will be transmitted to the non-network connected device 20 anyhow.

In case of a public key encryption scheme, e.g., RSA encryption, the method 10 may alternatively be realized as follows:

At step 11 of the method 10, initiating 11, by the non-network connected device 20, the cryptographic exchange or agreement may involve choosing a private key (e, N) of the non-network connected device 20, comprising a pair of numbers e, N,

providing a public key (d, N) of the non-network connected device 20,

choosing a shared secret key z (a random number), by the non-network connected device 20,

encrypting the shared secret key z, by the non-network connected device 20, using the public key (d, N) of the network connected device,

$$z\_enc = z^d \bmod N$$

displaying the encrypted key z_ enc at the non-network connected device 20, e.g. as a QR code similar as described in connection with the DH scheme, and

transferring the encrypted key z_ enc via the proxy device to the network connected device.

At step 12 of the method 10, completing 12, by the network connected device, the cryptographic exchange or agreement may involve the network connected device receiving the encrypted key z_ enc of the non-network device 20 from the proxy device, and the network connected device to determine the shared secret key z based on its private key (e, N):

$$z = z\_enc^e \bmod N$$

The remainder of the RSA scheme works similarly as described in connection with the DH scheme.

The DH and RSA encryption schemes respectively support using shared secret keys, which are persistent, or which expire and require renewal according to given time intervals.

Fig. 2 is a schematic diagram illustrating a network node 20 according to an embodiment.

The non-network connected device 20 is arranged to receive messages having a predetermined maximum length only.

The non-network connected device 20 comprises a processing device 21.

The processing device 21 is arranged for initiating 11 a cryptographic exchange of or agreement on a shared secret key between the non-network connected device 20 and a network connected device, wherein the network connected device is arranged for completing 12 the cryptographic exchange or agreement; and verifying 13 the shared secret key.

The processing device 21 is may further be arranged to perform the method 10 according to various embodiments.

**Claims**

1. A method (10) of cryptographic exchange of or agreement on a shared secret key between a non-network connected device (20) and a network connected device, the non-network connected device (20) being arranged to receive messages having a predetermined maximum length; the method (10) comprising

   - initiating (11), by the non-network connected device (20), the cryptographic exchange or agreement;
   - completing (12), by the network connected device, the cryptographic exchange or agreement; and

- verifying (13) the shared secret key.

2. The method (10) of claim 1, wherein

   - the non-network connected device (20) is arranged to receive messages having a predetermined maximum length corresponding to a predetermined number of decimal digits.

3. The method (10) of claim 1 or claim 2, wherein

   - initiating (11) and completing (12) the exchange or agreement respectively comprises using, by the network connected device and the non-network connected device, public-key cryptography, and the non-network connected device having a public key associated with the network connected device.

4. The method (10) of any one of claims 1 - 3, wherein

   - verifying (13) the shared secret key comprises determining (131), by the network connected device, a verification key from the shared secret key.

5. The method (10) of claim 4, wherein

   - determining (131), by the network connected device, the verification key from the shared secret key comprises using, by the network connected device, a verification key having the predetermined maximum length.

6. The method (10) of claim 4 or claim 5, wherein

   - verifying (13) the shared secret key further comprises communicating (132), from the network connected device to the non-network connected device (20), the determined verification key.

7. The method (10) of claim 6, wherein

   - communicating (132), from the network connected device to the non-network connected device (20), the determined verification key comprises communicating, from the network connected device to the non-network connected device, the determined verification key via a proxy device (40).

8. The method (10) of claim 7, wherein

   - communicating (132), from the network connected device to the non-network connected device (20), the determined verification key comprises displaying (1321), by the proxy device (40), the communicated verification key, and inputting (1322) the displayed verification key to the non-network connected device (20).

9. The method (10) of claim 8, wherein

   - communicating (132), from the network connected device to the non-network connected device (20), the determined verification key comprises inputting (1322) the displayed verification key to the non-network connected device (20) using a keyboard.

10. The method (10) of any one of claims 6 - 9, wherein

    - verifying (13) the shared secret key further comprises verifying (133), by the non-network connected device (20), the communicated verification key.

11. The method (10) of claim 10, wherein

    - verifying (133), by the non-network connected device (20), the communicated verification key comprises determining (1331), by the non-network connected device (20), a further verification key from the shared secret key.

12. The method (10) of claim 10 or claim 11, wherein

- verifying (133), by the non-network connected device (20), the communicated verification key further comprises comparing (1332), by the non-network connected device (20), the communicated verification key with the further verification key.

13. A non-network connected device (20), the non-network connected device (20) being arranged to receive messages having a predetermined maximum length, the non-network connected device (20) comprising

- a processing device (21) arranged for

o initiating (11) a cryptographic exchange of or agreement on a shared secret key between the non-network connected device (20) and a network connected device, the network connected device being arranged for completing (12) the cryptographic exchange or agreement; and
o verifying (13) the shared secret key.

14. The device (20) of claim 13, wherein

- the processing device (21) is arranged to perform the method (10) of any one of claims 2 - 12.

## FIG 1

10

11

12

13

131

132

133

1321

1322

1331

1332

## FIG 2

20

21

Europäisches
Patentamt

European
Patent Office

Office européen
des brevets

# EUROPEAN SEARCH REPORT

Application Number

EP 18 16 9421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/078090 A1 (GARAY JUAN [US] ET AL) 16 March 2017 (2017-03-16) * paragraphs [0035], [0050] - [0072]; figures 4-6 * ----- | 1-14 | INV. H04L29/06 ADD. H04W12/04 |
| X | US 2016/099920 A1 (MEULEMAN DERK JAN [BE] ET AL) 7 April 2016 (2016-04-07) * paragraphs [0124] - [0145], [0187]; figures 1, 2a * ----- | 1-14 | |
| X | US 2018/109418 A1 (CAMMAROTA ROSARIO [US] ET AL) 19 April 2018 (2018-04-19) * paragraphs [0033] - [0048]; figures 1,2 * ----- | 1-14 | |
| A | RESCORLA E: "Diffie-Hellman Key Agreement Method", NETWORK WORKING GROUP REQUEST FOR COMMENTS, XX, XX, no. 2631, 30 June 1999 (1999-06-30), pages 1-11, XP002282964, * the whole document * ----- | 1-14 | TECHNICAL FIELDS SEARCHED (IPC) H04L H04W |

The present search report has been drawn up for all claims

| Place of search | Date of completion of the search | Examiner |
|---|---|---|
| Munich | 13 August 2018 | Schumann, Elena |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 18 16 9421

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2018

| Patent document cited in search report | | Publication date | Patent family member(s) | | Publication date |
|---|---|---|---|---|---|
| US 2017078090 | A1 | 16-03-2017 | NONE | | |
| US 2016099920 | A1 | 07-04-2016 | NONE | | |
| US 2018109418 | A1 | 19-04-2018 | US 2018109418 | A1 | 19-04-2018 |
| | | | WO 2018075198 | A1 | 26-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8531247 B2
- US 8892616 B2
- US 8300811 B2
- US 9147088 B2
- US 9584311 B2
- EP 2976707 B1
- EP 2605445 B1
- EP 2870565 A1
- EP 2891102 A1
- WO 2017137256 A1
- EP 2870565 B1
- EP 3028140 B1
- EP 17175275 A
- US 8843761 B2